# EUROPÄISCHE PATENTSCHRIFT

(11) **EP 2 762 253 B1**
(45) Veröffentlichungstag und Bekanntmachung des Hinweises auf die Patenterteilung: **29.11.2017**
(21) Anmeldenummer: 14152963.6
(22) Anmeldetag: 29.01.2014
(51) Int. Cl.: B23B 3/16, B23Q 1/76

(54) **Werkzeugmaschine zur Bearbeitung von Werkstücken**
Machine tool for machining workpieces
Machine-outil destinée au traitement de pièces à usiner

(30) Priorität: 30.01.2013 DE 102013201542
(43) Veröffentlichungstag der Anmeldung: 06.08.2014
(73) Patentinhaber: MAG IAS GmbH, 73054 Eislingen (DE)
(72) Erfinder: Setzer, Friedhelm, 73033 Göppingen (DE); Fleischer, Achim, 78116 Wäschenbeuren (DE); Schweizer, Andreas, 73342 Bad-Ditzenbach-Gosbach (DE); Widmann, Johannes, 89558 Treffelhausen (DE); Reingen, Jürgen, 73035 Göppingen (DE)
(74) Vertreter: Rau, Schneck & Hübner Patentanwälte Rechtsanwälte PartGmbB

(56) Entgegenhaltungen:
- EP-A1- 0 796 698
- EP-A1- 1 418 019
- DE-A1- 10 308 342
- DE-A1- 19 900 294
- FR-A- 923 640

## Beschreibung

Die Erfindung betrifft eine Werkzeugmaschine zur Bearbeitung von Werkstücken, insbesondere von wellenförmigen Werkstücken, gemäß dem Oberbegriff des Anspruchs 1.

Aus der EP 1 418 019 B2 ist eine Werkzeugmaschine mit einem ständerförmigen Maschinengestell bekannt, an dem mehrere Werkstückspindeln hängend angeordnet sind. Die Werkzeugmaschine umfasst mindestens zwei rechts und links mehrerer Bearbeitungsstationen verfahrbar angeordnete Werkzeugrevolver mit jeweils einer Greifvorrichtung zum Erfassen, Transportieren und Positionieren von Werkstücken. Zumindest eine der Bearbeitungsstationen umfasst einen Setzstock bzw. eine Lünette, welche die zu bearbeitenden Werkstücke in vertikaler Stellung abstützt. Die Bearbeitungsstationen werden über eine als Magazin ausgebildete Werkstückzuführung von der Seite beladen. Das Zuführen bzw. Abführen der Werkstücke erfolgt mittels der jeweiligen Greifvorrichtung durch Verschwenken des Werkzeugrevolvers. Durch das Vorhandensein einer Lünette zur Stabilisierung der zu bearbeitenden Werkstücke wird die Bearbeitungsgenauigkeit erhöht, jedoch ist das Zuführen der Werkstücke zu den Bearbeitungsstationen bzw. das Entnehmen der Werkstücke deutlich erschwert. Weitere Werkzeugmaschinen sind bekannt aus der DE 199 00 294 A1, EP 0 796 698 A1, DE 103 08 342 A1 oder FR 923 640 A.

Der Erfindung liegt die Aufgabe zugrunde, eine Werkzeugmaschine der gattungsgemäßen Art derart weiterzubilden, dass Werkstücke mit einer großen Bearbeitungsgenauigkeit bearbeitbar sind, ohne dass das Be- und Entladen der Werkstückspindel beeinträchtigt ist.

Diese Aufgabe wird durch eine Werkzeugmaschine mit den Merkmalen des Anspruchs 1 gelöst. Dadurch, dass die Werkzeugmaschine neben einer an dem Maschinengestell angeordneten Werkstückspindel mit einer Werkstückaufnahme, noch eine Lünetteneinheit zum Abstützen der zu bearbeitenden Werkstücke aufweist, ist das zu bearbeitende Werkstück zusätzlich mittig einspannbar. Bei dem zu bearbeitenden Werkstück handelt es sich insbesondere um ein wellenförmiges Werkstück. Durch das mittige Einspannen des Werkstücks ist eine höhere Bearbeitungsgenauigkeit erzielbar. Insbesondere bei langen und/oder dünnen Werkstücken kann es notwendig sein, das Werkstück gegen auftretende radiale Bearbeitungskräfte abzustützen. Diese Abstützung ist durch die Lünetteneinheit erreichbar. Die zu bearbeitenden Werkstücke sind an deren von der Werkstückspindel abgewandten Ende ferner durch eine Gegenaufnahme, die gegenüberliegend zu der Werkstückspindel an dem Maschinengestell angeordnet ist, gelagert. Vorzugsweise ist die Gegenaufnahme als Reitstock gestaltet. Die Gegenaufnahme und die Werkstückspindel sind in z-Richtung zur Aufnahme wellenförmiger Werkstücke unterschiedlicher Länge relativ zueinander und linear verfahrbar. Vorzugsweise ist die Gegenaufnahme linear verfahrbar gestaltet und die Werkstückspindel fest an dem Maschinengestell angeordnet. Alternativ ist es auch möglich, die Gegenaufnahme als linear verfahrbare Gegenspindel auszubilden, welche eine zweite Werkstückaufnahme aufweist. Nach einer Bearbeitung des Werkstücks an einem ersten Wellenende durch mindestens eine Bearbeitungseinheit bei Einspannung des Werkstücks in der Werkstückspindel kann das Werkstück zur weiteren Bearbeitung an einem zweiten Wellenende an die Gegenspindel übergeben werden. Bei einer Bearbeitung eines der Wellenenden ist das Werkstück benachbart zu dem jeweils bearbeiteten Wellenende durch die Lünetteneinheit abstützbar.

Die Lünetteneinheit ist in einer Maschinengestell-Ausnehmung, die sich in einer horizontalen y-Richtung in dem Maschinengestell erstreckt, angeordnet. Die Lünetteneinheit ist in der y-Richtung verfahrbar. Diese Verfahrbarkeit gewährleistet, dass die Lünetteneinheit während des Be- und Entladens der Werkstückspindel mit Werkstücken aus dem Arbeitsraum herausfahrbar ist. Das Werkstück ist so einfach in die Werkstückspindel einsetzbar bzw. aus dieser entnehmbar, ohne dass beim Be- und Entladen die Lünetteneinheit hinderlich ist. Dies gilt insbesondere für ein seitliches Be- und Entladen. Zum Beladen, Abstützen und Entladen des jeweils zu bearbeitenden Werkstücks ist die Lünetteneinheit derart linear in der y-Richtung zu verfahren, dass eine Lünette der Lünetteneinheit das Be- und Entladen einerseits nicht beeinträchtigt, jedoch andererseits ein Abstützen ermöglicht. In einer Lünetten-Parkposition, in welcher die Lünetteneinheit in der Maschinengestell-Ausnehmung versenkt ist, ist die Gegenaufnahme in deren Hub nicht eingeschränkt. In der Lünetten-Parkposition ist ferner beim Be- und Entladen der zu bearbeitenden Werkstücke eine Bewegungsbahn von Werkstückgreifern einer Ladeeinheit nicht beeinträchtigt. Die Lünetteneinheit ist ferner in der z-Richtung verfahrbar. Dadurch wird ermöglicht, dass die Lünetteneinheit das zu bearbeitende Werkstück in jeder beliebigen Position entlang der z-Richtung stützen kann. Es ist so möglich, dass wellenförmige Werkstücke unterschiedlicher Länge abstützbar sind. Ferner wird durch ein Verfahren der Lünetteneinheit in z-Richtung auch der Bereich des Werkstücks bearbeitbar, der zunächst von der Lünetteneinheit abgestützt wurde und nicht bearbeitbar war. Das Verfahren der Lünetteneinheit in z-Richtung erfolgt vorzugsweise durch einen Eigenantrieb der Lünetteneinheit. Als Eigenantrieb eignet sich insbesondere ein Zahnstangenantrieb. Die Verfahrbarkeit der Lünetteneinheit in z-Richtung ermöglicht auf einfache Art und Weise eine Anpassung der Lünetteneinheit an verschiedene Drehlängen der Werkzeugmaschine und daraus resultierende Größenänderungen der Maschinengestell-Ausnehmung. Um die Führung in z-Richtung platzsparend zu realisieren, ist die Lünetteneinheit insbesondere an gleichen z-Führungsschienen geführt wie die Gegenaufnahme.
Beim Abstützen der zu bearbeitenden Werkstücke sind diese durch die mindestens eine Bearbeitungseinheit in z-Richtung sowohl unterhalb als auch oberhalb der Lünette bearbeitbar. Der Aufbau der Lünetteneinheit ist vergleichsweise einfach. Durch die Lünetteneinheit ist neben einer erhöhten Bearbeitungsgenauigkeit durch Abstützen der zu bearbeitenden Werkstücke auch ein einfacher und schneller Bewegungsablauf beim Be- und Entladen von Werkstücken erzielbar.

Die Ausgestaltung nach Anspruch 2 sieht vor, dass die Lünetteneinheit einen in der horizontalen y-Richtung verfahrbaren Lünettenschlitten aufweist. Der Lünettenschlitten ist zum Abstützen des zu bearbeitenden Werkstücks entlang der y-Richtung aus der Maschinengestell-Ausnehmung herausfahrbar. Während des Be- und Entladens ist der Lünettenschlitten in der Maschinengestell-Ausnehmung angeordnet, wodurch der Be- und Entladevorgang nicht behindert ist.

Nach Anspruch 3 weist die Lünetteneinheit ein Traggestell auf, welches an dem Maschinengestell angeordnet ist und sich in der x-Richtung und y-Richtung erstreckt und entlang der z-Richtung in der Maschinengestell-Ausnehmung linear verfahrbar ist. Der Lünettenschlitten ist vorteilhafterweise an dem Traggestell verfahrbar angeordnet. An dem Maschinengestell sind z-Führungsschienen angeordnet, an denen das Traggestell gelagert ist und mittels einer z-Antriebsvorrichtung in der z-Richtung verfahrbar ist. Bei der Antriebsvorrichtung handelt es sich vorzugsweise um einen Zahnstangenantrieb. Hierdurch wird ein einfaches und sicheres Verfahren des Traggestells in z-Richtung gewährleistet. Es ist grundsätzlich auch vorstellbar, die Bewegung des Traggestells der Lünetteneinheit und die Bewegung der Gegenaufnahme in z-Richtung koppelbar zu gestalten. Für diese Gestaltung sind das Traggestell und die Gegenaufnahme auf gemeinsamen z-Führungsschienen anzuordnen und über ein z-Übertragungsglied zu koppeln. Eine derartige Kopplung ist beliebig zu aktivieren oder zu deaktivieren.

Nach Anspruch 4 ist der Lünettenschlitten relativ zu dem Traggestell in y-Richtung zwischen einer Lünetten-Arbeitsposition und einer Lünetten-Parkposition verfahrbar angeordnet. Der Lünettenschlitten ist vorzugsweise durch das Traggestell getragen. Alternativ ist es auch vorstellbar, den Lünettenschlitten hängend an einer Unterseite des Traggestells anzuordnen. Die Bewegung des Traggestells in z-Richtung wird unmittelbar auf den Lünettenschlitten übertragen. Durch die bewegliche Anordnung des Lünettenschlittens und des Traggestells relativ zueinander ist eine konstruktiv besonders einfache und wirkungsvolle Bewegungsmöglichkeit der Lünetteneinheit in y- und z-Richtung erreicht.

Nach Anspruch 5 ist mindestens eine Linearführungsanordnung zur Führung des Lünettenschlittens in y-Richtung an dem Traggestell vorgesehen. Die Linearführungsanordnung umfasst mindestens einen an dem Traggestell angeordneten Lagerkörper und mindestens eine an dem Lünettenschlitten angeordnete Laufschiene, wobei der mindestens eine Lagerkörper die mindestens eine Laufschiene verschiebbar führt. Bei dem mindestens einen Lagerkörper handelt es sich um eine y-Führungsschiene, an der die Laufschiene des Lünettenschlittens verfahrbar ist. Durch diese Gestaltung wird ein einfaches und sicheres Verfahren des Lünettenschlittens relativ zu dem Traggestell gewährleistet.

Eine Werkzeugmaschine nach Anspruch 6 umfasst einen Lünettenschlitten, der entlang der y-Richtung mittels einer Linearantriebsvorrichtung verfahrbar ist, wobei die Linearantriebsvorrichtung auf dem Traggestell angeordnet ist. Bei der Linearantriebsvorrichtung handelt es sich vorzugsweise um einen Arbeitszylinder, insbesondere einen Hydraulikzylinder oder Pneumatikzylinder. Dadurch wird eine automatische Ansteuerung des Lünettenschlittens in y-Richtung relativ zu dem Traggestell ermöglicht.

Eine Werkzeugmaschine nach Anspruch 7 sieht vor, dass an dem Lünettenschlitten eine Lünette mit mindestens zwei als Abstützelemente dienenden Klemmbacken angeordnet ist, wobei das Werkstück in der Lünetten-Arbeitsposition zwischen den Klemmbacken drehbar abgestützt ist. Mittels der Klemmbacken werden Schwingungen des zu bearbeitenden Werkstücks sowie ein Drücken des Werkstücks aus seiner Drehachse während der Bearbeitung verhindert. Die Lünette ist in der Lünetten-Parkposition in der Maschinengestell-Ausnehmung und in der Lünetten-Arbeitsposition im Arbeitsraum außerhalb der Maschinengestell-Ausnehmung angeordnet. Die Klemmbacken umfassen vorzugsweise jeweils einen Tragarm, in dem jeweils mindestens eine Klemmwalze gelagert ist, die das zu bearbeitende Werkstück in der Lünetten-Arbeitsposition stützt. Vorzugsweise weist jeder Tragarm genau eine Klemmwalze auf. Es ist möglich, dass neben den zwei Klemmbacken noch ein weiteres Klemmelement vorgesehen ist. Vorteilhafterweise handelt es sich bei dem weiteren Klemmelement um eine in einem Lünettengehäuse zwischen den Klemmbacken drehbar gelagerte dritte Klemmwalze. Durch das Vorsehen dreier drehbar gelagerter Klemmwalzen ist eine drehbare Dreipunktlagerung des zu bearbeitenden Werkstücks möglich. Die Tragarme der Klemmwalzen sind beispielsweise pneumatisch oder hydraulisch mittels eines Zwei-Wege-Kolbens gesteuert. Die Klemmbacken üben eine Klemmkraft mit ausgeglichenem Kräfteverhältnis auf das Werkstück aus. So ist ein automatisches, präzises Abstützen des Werkstücks ermöglicht. Die Klemmbacken schließen einen Werkstückabstützraum ein, der in der Lünetten-Arbeitsposition von dem zu bearbeitenden Werkstück durchsetzt ist, wobei das Werkstück in dem Werkstückabstützraum durch die Klemmbacken drehbar abgestützt ist. In der Lünetten-Parkposition ist der Werkstückabstützraum nicht von der Drehachse der Werkstückspindel durchsetzt.

Die Gestaltung einer Werkzeugmaschine nach Anspruch 8 sieht vor, dass die Klemmbacken jeweils um eine in der z-Richtung verlaufende Klemmbackenschwenkachse verschwenkbar sind, wobei das Verschwenken der Klemmbacken durch einen Klemmbackenantrieb erfolgt. Durch das Verschwenken der Klemmbacken ist der Werkstückabstützraum veränderbar, wodurch Werkstücke mit unterschiedlichem Durchmesser durch die Lünette der Lünetteneinheit abstützbar sind. Bei dem Klemmbackenantrieb kann es sich wie oben beschrieben, beispielsweise um einen pneumatischen oder hydraulischen Kolbenantrieb handeln. Das Verschwenken der Klemmbacken kann auch ohne Antrieb erfolgen, wobei in der Lünetten-Parkposition die Klemmbacken im Bereich derer Klemmwalzen eng benachbart zu einander angeordnet sind, wobei die Klemmbacken unter einer Vorspannung stehen. Beim Bewegen der Klemmbacken in y-Richtung auf das Werkstück zu, werden die Klemmbacken mittels Krafteinwirkung durch das Werkstück voneinander wegbewegt, der Abstand der Klemmwalzen zueinander vergrößert sich entsprechend einem Werkstückdurchmesser, wobei die Vorspannung der Klemmbacken mittels der Klemmwalzen dann auf das Werkstück übertragen wird.

Die Ausgestaltung nach Anspruch 9 sieht vor, dass der Lünettenschlitten einen dem abstützenden Werkstück zugewandten Abstützabschnitt und einen in y-Richtung zum Abstützabschnitt beabstandeten Antriebsabschnitt aufweist. Dabei dient der Abstützabschnitt zur Aufnahme der Lünette und der Antriebsabschnitt zum Zusammenwirken mit der Linearantriebsvorrichtung. Diese Gestaltung ermöglicht ein einfaches und schnelles Bewegen der Lünetteneinheit zum Überführen des Lünettenschlittens von der Lünetten-Parkposition in die Lünetten-Arbeitsposition und umgekehrt. Dadurch, dass die Lünette auf dem dem Arbeitsraum zugewandten Abstützabschnitt des Lünettenschlittens angeordnet ist, muss der Lünettenschlitten zum Verfahren in die Lünetten-Arbeitsposition nur geringfügig linear bewegt werden. Der Antriebsabschnitt bewegt sich entlang der y-Achse lediglich innerhalb der Maschinengestell-Ausnehmung, wobei der Abstützabschnitt beim Abstützen des Werkstücks durch die Lünette im Arbeitsraum angeordnet ist.

Eine Werkzeugmaschine nach Anspruch 10 umfasst zwei Bearbeitungseinheiten, die beidseitig neben der Werkstückspindel angeordnet sind, wobei die Maschinengestell-Ausnehmung in dem Maschinengestell in x-Richtung zwischen den Bearbeitungseinheiten angeordnet ist. Dadurch, dass zwei Bearbeitungseinheiten das in der Werkzeugspindel befindliche Werkstück bearbeiten, wird die Bearbeitungsdauer des Werkstücks im Vergleich zu nur einer Bearbeitungseinheit verkürzt. Hierdurch wird die Produktivität der Werkzeugmaschine erhöht. Durch das Vorsehen der Maschinengestell-Ausnehmung zwischen den Bearbeitungseinheiten und der Anordnung der Lünetteneinheit in der Maschinengestell-Ausnehmung ist es nicht notwendig, die Lünetteneinheit in x-Richtung verschiebbar zu gestalten, da die Lünetteneinheit so in y-Richtung mit dem zu bearbeitenden Werkstück fluchtet.

Nach Anspruch 11 ist die Maschinengestell-Ausnehmung in dem Maschinengestell in z-Richtung zwischen der drehbaren Gegenaufnahme und der Werkstückspindel angeordnet. Die Maschinengestell-Ausnehmung erstreckt sich in z-Richtung vorzugsweise zumindest von x-Führungsschienen der mindestens einen Bearbeitungseinheit bis zu einem Maschinenbett. Hierdurch ist ermöglicht, dass die Lünette der Lünetteneinheit das zu bearbeitende Werkstück in jeder beliebigen Position entlang der z-Richtung zwischen Werkstückspindel und Gegenaufnahme abstützen kann. Hierdurch ist eine hohe Bearbeitungsgenauigkeit für wellenförmige Werkstücke beliebiger Länge gewährleistet.

Gemäß Anspruch 12 ist die Maschinengestell-Ausnehmung als Durchbruch ausgebildet. Dadurch wird eine hohe Gestaltungsfreiheit bei der Konstruktion der Lünetteneinheit, insbesondere bei der Bewegung des Lünettenschlittens entlang der y-Richtung, erreicht. Die Maschinengestell-Ausnehmung erstreckt sich dabei vom Arbeitsraum bis zu einer dem Arbeitsraum abgewandten Rückseite des Maschinengestells. Die Ausgestaltung der Maschinengestell-Ausnehmung als Durchbruch hat ferner den Vorteil, dass die Lünetteneinheit zu Wartungs- oder Reparaturzwecken besonders einfach zugänglich ist.

Eine Werkzeugmaschine nach Anspruch 13 umfasst eine Ladeeinheit zum seitlichen Be- und Entladen der Werkstückspindel mit Werkstücken. Die Ladeeinheit ermöglicht ein schnelles und flexibles Bestücken der Werkstückspindel. Durch eine seitliche Ladeeinheit ist ein einfacher und schneller Bewegungsablauf beim Be- und Entladen von Werkstücken gewährleistet. Die Ladeeinheit umfasst vorzugsweise mindestens einen Werkstückgreifer, der die Werkstücke von einer Fördereinrichtung, beispielsweise einem Förderband, greift und der Werkstückspindel oder optional der als Gegenspindel ausgebildeten Gegenaufnahme zuführt. Während einer Bearbeitung eines Werkstücks kann von der Ladeeinheit gleichzeitig ein fertig bearbeitetes Werkstück abgeführt und ein zu bearbeitendes Werkstück bereitgestellt werden. Hierdurch steht immer ein zu bearbeitendes Werkstück bereit, welches durch eine Drehbewegung des Werkstückgreifers zugeführt werden kann.

Weitere Merkmale, Vorteile und Einzelheiten der Erfindung ergeben sich aus der nachfolgenden Beschreibung eines Ausführungsbeispiels. Es zeigen:
- Fig. 1: eine perspektivische Ansicht einer Werkzeugmaschine mit einer Lünetteneinheit zum Abstützen eines zu bearbeitenden Werkstücks in einer Lünetten-Parkposition, wobei aus Gründen der Übersichtlichkeit eine von zwei Bearbeitungseinheiten der Werkzeugmaschine nicht dargestellt ist,
- Fig. 2: eine perspektivische Ansicht der Werkzeugmaschine gemäß Fig. 1 mit der Lünetteneinheit in einer Lünetten-Arbeitsposition,
- Fig. 3: eine Frontansicht der Werkzeugmaschine gemäß Fig. 2, wobei hier die zweite Bearbeitungseinheit dargestellt ist,
- Fig. 4: eine teilweise geschnittene Seitenansicht der Werkzeugmaschine gemäß Schnittlinie IV-IV in Fig. 3 in der Lünetten-Parkposition,
- Fig. 5: eine Fig. 4 entsprechende, geschnittene Seitenansicht der Werkzeugmaschine in der Lünetten-Arbeitsposition,
- Fig. 6: eine teilweise geschnittene Draufsicht der Werkzeugmaschine gemäß Schnittlinie VI-VI in Fig. 3 in der Lünetten-Parkposition,
- Fig. 7: eine Fig. 6 entsprechende, geschnittene Draufsicht der Werkzeugmaschine in der Lünetten-Arbeitsposition,
- Fig. 8: eine perspektivische Ansicht der Werkzeugmaschine mit zwei Bearbeitungseinheiten, und
- Fig. 9: eine perspektivische Ansicht einer alternativen Ausführungsvariante einer Lünetteneinheit in einer isolierten Darstellung.

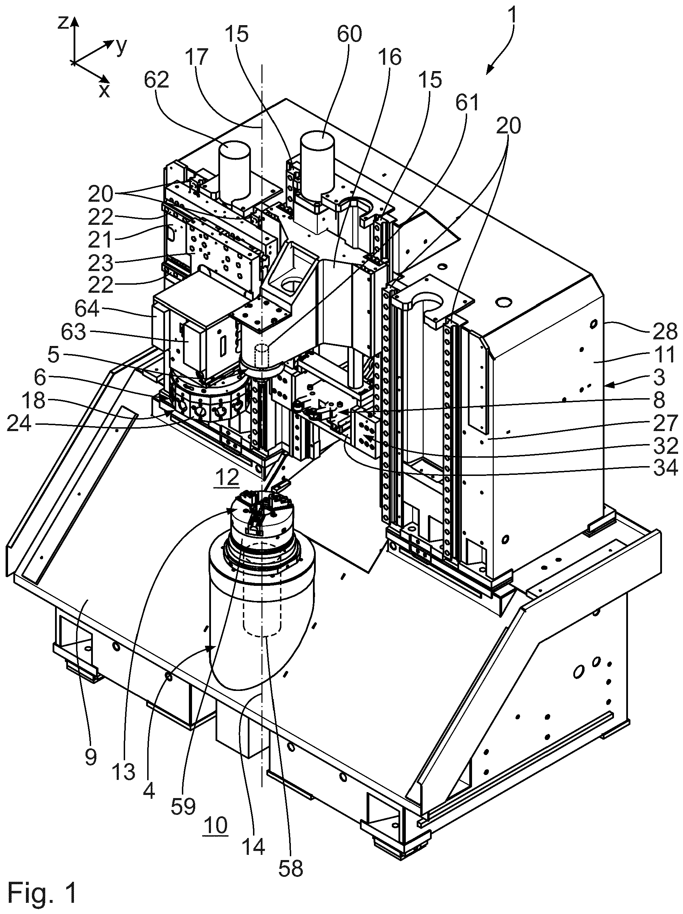

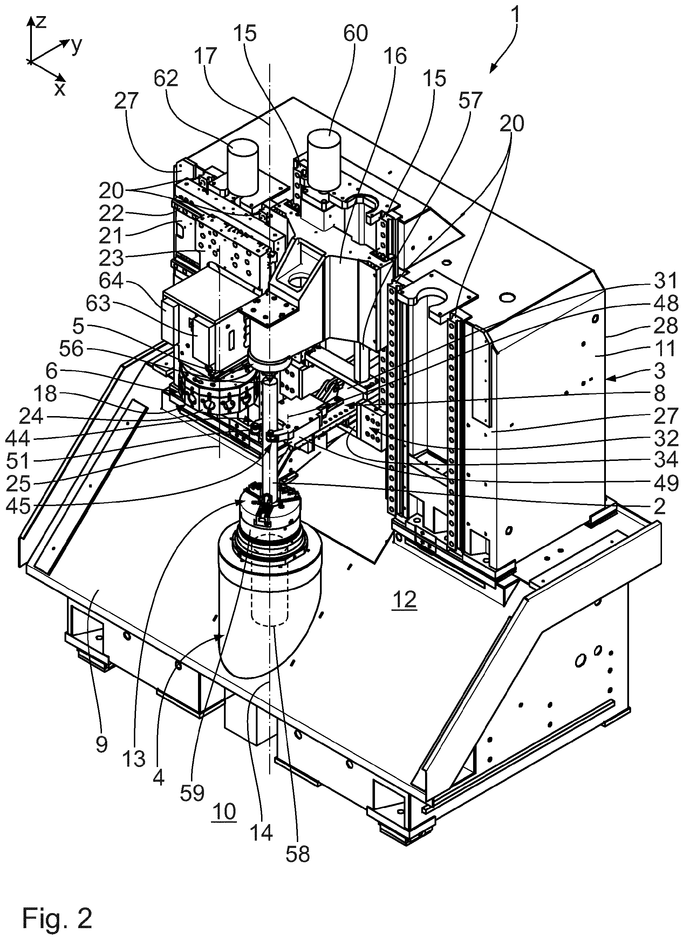

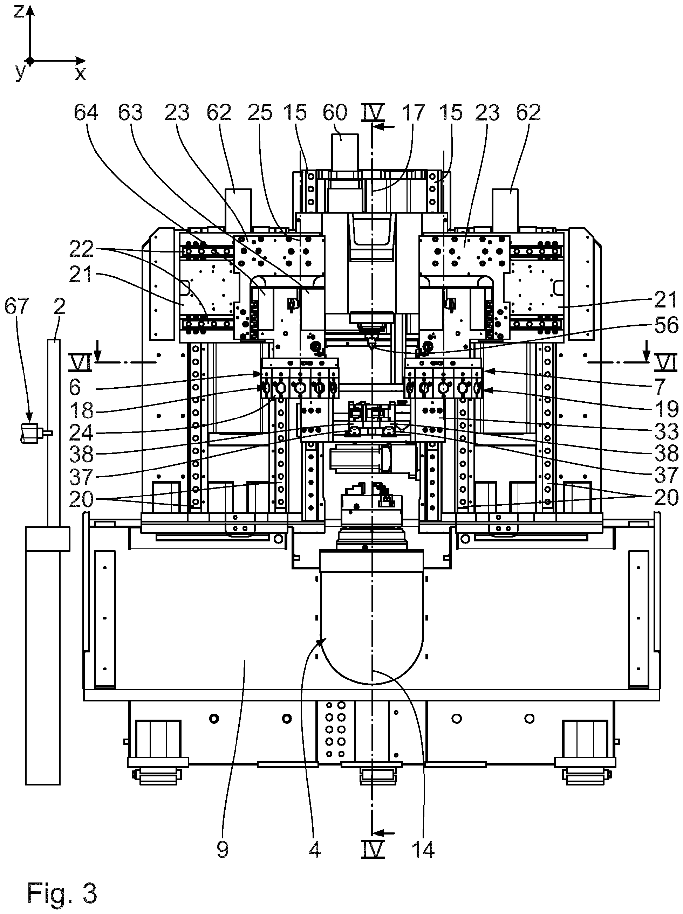

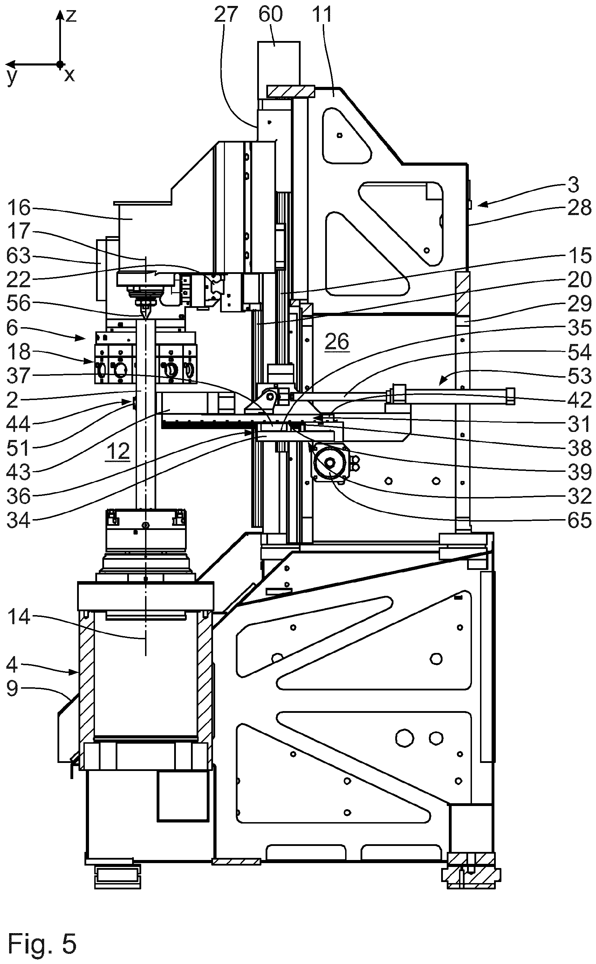

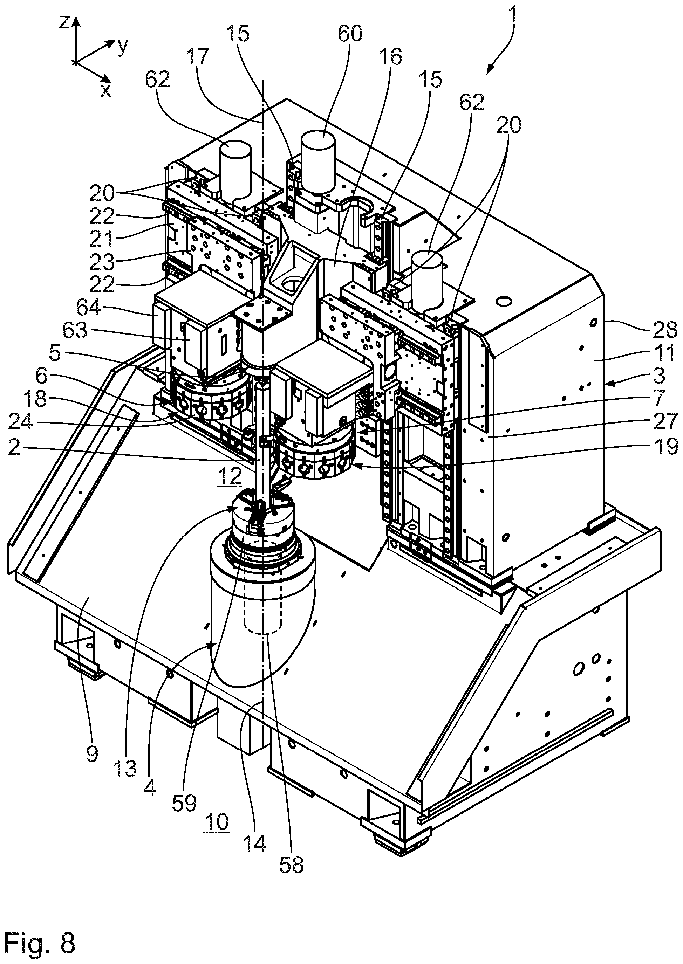

Anhand der Fig. 1 bis Fig. 8 wird nachfolgend ein bevorzugtes Ausführungsbeispiel einer Werkzeugmaschine 1 beschrieben. Die Werkzeugmaschine 1 weist zur Bearbeitung von wellenförmigen Werkstücken 2 ein ständerförmiges Maschinengestell 3 auf, an dem eine Werkstückspindel 4, eine Gegenaufnahme 5, zwei Bearbeitungseinheiten 6, 7 sowie eine Lünetteneinheit 8 angeordnet sind. Aus Gründen der Übersichtlichkeit ist in Fig. 1 und Fig. 2 lediglich die erste Bearbeitungseinheit 6 dargestellt. Die zweite Bearbeitungseinheit 7 ist in den Figuren 3 und 8 veranschaulicht.

Das Maschinengestell 3 umfasst ein Maschinenbett 9, das auf einer Fundamentplatte 10 befestigt ist und sich im Wesentlichen in einer horizontalen x-Richtung und einer horizontalen y-Richtung erstreckt. Auf dem Maschinenbett 9 ist ein Ständer 11 befestigt, der sich im Wesentlichen in der x-Richtung und einer vertikalen z-Richtung erstreckt. Ausgehend von dem Ständer 11 verläuft das Maschinenbett 9 in der y-Richtung schräg nach unten in Richtung der Fundamentplatte 10. Der abgeschrägte Abschnitt des Maschinenbetts 9 definiert zusammen mit dem Ständer 11 einen Arbeitsraum 12 für die Werkstückbearbeitung. Die x-, y- und z-Richtungen verlaufen jeweils senkrecht zueinander und bilden ein kartesisches Koordinatensystem.

Auf dem Maschinenbett 9 ist die Werkstückspindel 4 fest, also linear nicht verfahrbar und stehend angeordnet. Die Werkstückspindel 4 weist eine Werkstückaufnahme 13 auf, die mittels eines ersten Spindel-Antriebsmotors 58 um eine parallel zu der z-Richtung verlaufende erste Spindel-Drehachse 14 drehantreibbar ist. Die Spannbacken der Werkstückaufnahme 13 bzw. des Spannfutters sind mittels eines Spannfutterantriebs 59 betätigbar.

Die Gegenaufnahme 5 ist gegenüberliegend zu der Werkstückspindel 4 linear verfahrbar an dem Ständer 11 angeordnet. Hierzu sind an dem Ständer 11 zwei erste z-Führungsschienen 15 parallel beabstandet zueinander befestigt, auf denen ein erster z-Schlitten 16 mittels eines ersten z-Antriebsmotors 60 in der z-Richtung linear verfahrbar angeordnet ist. An dem z-Schlitten 16 ist die Gegenaufnahme 5 hängend befestigt. In dem gezeigten Ausführungsbeispiel gemäß den Fig. 1 bis Fig. 8 ist die Gegenaufnahme 4 als Reitstock mit einer Zentrierspitze 56 ausgebildet. Die Gegenaufnahme 5 ist um eine zweite Drehachse 17 drehbar gelagert. Die erste Spindel-Drehachse 14 und die zweite Drehachse 17 sind deckungsgleich. Das jeweilige wellenförmige Werkstück 2 ist in einer in Fig. 2 gezeigten Arbeitsposition an einem ersten Ende in der Werkstückaufnahme 13 der Werkstückspindel 4 gehalten und an einem zweiten Ende an der Gegenaufnahme 5 gelagert.

Wie insbesondere Fig. 3 zu entnehmen, ist in der x-Richtung neben der Werkstückspindel 4 und der Gegenaufnahme 5 jeweils eine der Bearbeitungseinheiten 6, 7 an dem Ständer 11 angeordnet. Die Bearbeitungseinheiten 6, 7 weisen jeweils einen als Werkzeugrevolver ausgebildeten Werkzeughalter 18, 19 auf. Die Werkzeughalter sind nachfolgend als Werkzeugrevolver 18, 19 bezeichnet. Die Werkzeugrevolver 18, 19 sind jeweils in der x-Richtung und der z-Richtung linear verfahrbar an dem Ständer 11 angeordnet.

Die Bearbeitungseinheiten 6, 7 sind prinzipiell gleich aufgebaut, jedoch aufgrund der Anordnung an verschiedenen Seiten der Werkstückspindel 4 bzw. der Gegenaufnahme 5 spiegelsymmetrisch. Nachfolgend ist lediglich die Bearbeitungseinheit 6 im Detail beschrieben. Die Bearbeitungseinheit 7 ist entsprechend aufgebaut.

An dem Ständer 11 sind zweite z-Führungsschienen 20 angeordnet, auf denen ein zweiter z-Schlitten 21 mittels eines zweiten z-Antriebsmotors 62 in der z-Richtung linear verfahrbar ist. Auf dem z-Schlitten 21 sind x-Führungsschienen 22 angeordnet, auf denen wiederum ein x-Schlitten 23 mittels eines aus Übersichtlichkeitsgründen nicht dargestellten x-Antriebsmotors in der x-Richtung linear verfahrbar ist. An dem x-Schlitten 23 ist der Werkzeugrevolver 18 befestigt, dessen Revolverscheibe 24 mittels eines Revolver-Antriebsmotors 63 um eine parallel zu der z-Richtung verlaufende Revolver-Drehachse 25 drehantreibbar ist. Die Revolver-Drehachse 25 fluchtet in der x-Richtung mit der Spindel-Drehachse 14 und der zweiten Drehachse 17. In der Revolverscheibe 24 sind mehrere Werkzeuge aufnehmbar. Zusätzlich weist der Werkzeugrevolver 18 einen Werkzeug-Antriebsmotor 64 zum Drehantreiben einzelner Werkzeuge auf. Die Bearbeitungseinheiten 6, 7 bzw. die Werkzeugrevolver 18, 19 mit den darin aufgenommenen Werkzeugen sind derart seitlich neben der Werkstückspindel 4 bzw. der Gegenaufnahme 5 angeordnet, dass ein darin aufgenommenes Werkstück 2 mittels der Werkzeuge bearbeitbar ist. Die Werkzeugrevolver 18, 19 und das jeweils zugehörige Werkzeug sind vorzugsweise derart ausgebildet, dass insbesondere Bearbeitungsschritte wie Drehen, Fräsen, Bohren, Schleifen, Wälzfräsen und/oder Laserhärten grundsätzlich ausführbar sind.

In dem Ständer 11 ist zwischen den z-Führungsschienen 20 der Bearbeitungseinheiten 6, 7 im Bereich zwischen der Werkstückspindel 4 und der Gegenaufnahme 5 eine Maschinengestell-Ausnehmung 26 ausgebildet. Die Maschinengestell-Ausnehmung 26 ist in dem gezeigten Ausführungsbeispiel gemäß den Fig. 1 bis Fig. 8 als Durchbruch ausgebildet und erstreckt sich in y-Richtung von einer dem Arbeitsraum 12 zugewandten Frontseite 27 bis zu einer Rückseite 28 des Ständers 11. An der Rückseite 28 ist die Maschinengestell-Ausnehmung 26 mittels einer Abdeckung 29 verschließbar.

In der Maschinengestell-Ausnehmung 26 ist eine Lünetteneinheit 8 angeordnet, die zum Abstützen der zu bearbeitenden Werkstücke 2 dient. Die Lünetteneinheit 8 weist einen Lünettenschlitten 31 und ein Traggestell 32 auf. Das Traggestell 32 ist an dem Ständer 11 des Maschinengestells 3 zwischen den z-Führungsschienen 20 der Bearbeitungseinheiten 6, 7 angeordnet und entlang der z-Richtung in der Maschinengestell-Ausnehmung 26 verfahrbar. In dem gezeigten Ausführungsbeispiel umfasst das Traggestell 32 zu diesem Zweck einen sich in x-Richtung erstreckenden, U-förmigen Basisabschnitt 33, welcher an den ersten z-Führungsschienen 15 mittels z-Lagerkörpern 30 verschiebbar gelagert ist. Der Basisabschnitt 33 ist an den z-Führungsschienen 15 zwischen der ebenfalls an den z-Führungsschienen 15 gelagerten Gegenaufnahme 5 und dem Maschinenbett 9 in z-Richtung verschiebbar angeordnet. Alternativ ist es auch möglich, weitere z-Führungsschienen an dem Ständer 11 vorzusehen, die ausschließlich zur Führung des Traggestells 32 in z-Richtung dienen. Der Basisabschnitt 33 ist vorzugsweise mittels eines Zahnstangenantriebes 65 entlang der z-Führungsschienen verfahrbar.

Von dem Basisabschnitt 33 erstreckt sich in y-Richtung ein Auflageabschnitt 34 weg in Richtung Maschinengestell-Ausnehmung 26. Der Auflageabschnitt 34 und der Basisabschnitt 33 bilden zusammen das entlang der y-Richtung verfahrbare Traggestell 32 der Lünetteneinheit 8.

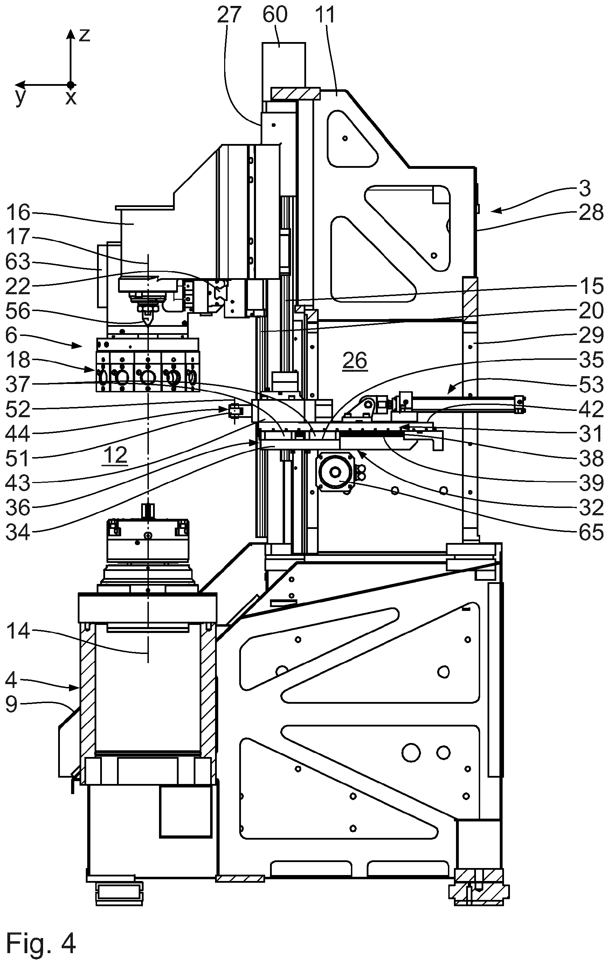

Auf einer Oberseite 35 des Auflageabschnitts 34 ist eine Linearführungsanordnung 36 zur Führung des Lünettenschlittens 31 in y-Richtung an dem Traggestell 32 vorgesehen. Die Linearführungsanordnung 36 umfasst mindestens zwei auf der Oberseite 35 des Auflageabschnitts 34 vorgesehene Lagerkörper 37, die sich jeweils in y-Richtung benachbart zu einander erstrecken, und mindestens zwei an dem Lünettenschlitten 31 vorgesehene Laufschienen 38, bei denen es sich y-Laufschienen handelt. Die Laufschienen 38 sind an einer Unterseite 39 des Lünettenschlittens 31 angeordnet. Wie insbesondere Fig. 4 zu entnehmen, sind jeweils zwei Lagerkörper 37 in y-Richtung auf dem Auflageabschnitt 34 in Reihe angeordnet. Zwei Lagerkörper 37 führen also jeweils eine Laufschiene 38 in y-Richtung verschiebbar.

Durch die Linearführungsanordnung 36 ist der Lünettenschlitten 31 relativ zu dem Traggestell 32 in y-Richtung zwischen einer in Fig. 2 gezeigten Lünetten-Arbeitsposition, in der die Lünetteneinheit 8 die zu bearbeiteten Werkstücke abstützt, und einer in Fig. 1 gezeigten Lünetten-Parkposition, in welcher kein Werkstück durch die Werkzeugmaschine 1 bearbeitet wird, verfahrbar angeordnet. Die Lünetteneinheit 8 ist durch die Gestaltung des Lünettenschlittens 31 und des Traggestells 32 sowohl in der y-Richtung als auch in der z-Richtung verfahrbar.

Der Lünettenschlitten 31 umfasst einen dem abzustützenden Werkstück 2 zugewandten Abstützabschnitt 40 und einen in y-Richtung dem Abstützabschnitt 40 abgewandten Antriebsabschnitt 41. Auf einer den Laufschienen 38 abgewandten Oberseite 42 des Lünettenschlittens 31 ist im Bereich des Abstützabschnitts eine Lünette 43 angeordnet.

In der Ausführungsvariante gemäß den Fig. 1 bis Fig. 8 umfasst die Lünette 43 als Klemmelemente zwei Klemmbacken 44, 45, zwischen denen das Werkstück 2 in der Lünetten-Arbeitsposition drehbar abgestützt ist. Die Klemmbacken 44, 45 schließen einen Werkstückabstützraum 46 ein und sind jeweils um eine in z-Richtung verlaufende Klemmbackenschwenkachse 47, 48 verschwenkbar. Das Verschwenken der Klemmbacken 44, 45 erfolgt durch einen Klemmbackenantrieb, der in einem Lünettengehäuse 49 untergebracht ist. Das Lünettengehäuse 49 dient als Träger von verbauten mechanischen, elektrischen und hydraulischen Komponenten der Lünetteneinheit 8. Der Klemmbackenantrieb ist vorzugsweise pneumatisch oder hydraulisch verwirklicht, insbesondere mittels eines 2-Wege-Kolbens. Das Lünettengehäuse 49 ist mit dem Lünettenschlitten 31 im Abstützabschnitt 40 fest verbunden.

Die Klemmbacken 44, 45 umfassen jeweils einen sich in y-Richtung erstreckenden Tragarm 50, in denen jeweils eine Klemmwalze 51 rotierbar gelagert ist. Die Klemmwalzen 51 sind jeweils um in z-Richtung verlaufende Klemmwalzendrehachsen 52 rotierbar, wobei die Klemmwalzen 51 das zu bearbeitende Werkstück 2 in der Lünetten-Arbeitsposition abstützen. Die Klemmwalzen 51 der Klemmbacken 44, 45 üben eine Klemmkraft auf das Werkstück 2 in der Lünetten-Arbeitsposition aus, wobei eine Rotation des Werkstücks 2 zugelassen ist. Neben den zwei Klemmbacken 44, 45 ist noch ein drittes Klemmelement 66 vorgesehen. Bei dem dritten Klemmelement 66 handelt es sich um eine in dem Lünettengehäuse 49 zwischen den Klemmbacken 44, 45 drehbar gelagerte dritte Klemmwalze 66. Durch das Vorsehen dreier drehbar gelagerter Klemmwalzen 51, 66 ist eine drehbare Dreipunktlagerung des zu bearbeitenden Werkstücks 2 durch die Lünette 43 möglich.

Es ist alternativ auch möglich, dass je Tragarm 50 mehrere Klemmwalzen vorgesehen sind, die jeweils um eine Klemmwalzen-Drehachse rotierbar sind und das zu bearbeitende Werkstück 2 in der Lünetten-Arbeitsposition abstützen.

Die Klemmbacken 44, 45 sind jeweils um die Klemmbackenschwenkachse 47, 48 zwischen einer Freigabeposition und einer Abstützposition verschwenkbar, wobei ein Schwenkwinkel der Klemmbacken 44, 45 vorteilhafterweise jeweils zwischen 20 und 90° beträgt. Durch das Verschwenken der Klemmbacken 44, 45 ist der Werkstückabstützraum 46 veränderbar, wodurch wellenartige Werkstücke 2 mit unterschiedlichem Durchmesser durch die Lünette 43 abstützbar sind.

Der Lünettenschlitten 31 ist entlang der y-Richtung relativ zu dem Traggestell 32 mittels einer Linerantriebsvorrichtung 53 verfahrbar. Die Linearantriebsvorrichtung 53 ist auf dem Auflageabschnitt 34 des Traggestells 32 angeordnet. In der gezeigten Ausführungsvariante handelt es sich bei der Linearantriebsvorrichtung 53 um eine hydraulische Kolben-Zylinder-Einheit, der eine automatisierte Ansteuerung des Lünettenschlittens 31 in y-Richtung relativ zu dem Traggestell 32 ermöglicht. Ein Arbeitskolben 54 der Linearantriebsvorrichtung 53 greift am Antriebsabschnitt 41 an der Oberseite 42 des Lünettenschlittens 31 an und steht mit diesem in kraftübertragenderweise in Verbindung. Der Arbeitskolben 54 ist vorzugsweise endlagengedämpft, wobei die genaue Endlagenposition, zum Abstützen des Werkstücks, über einen mechanisch einstellbaren Anschlag einrichtbar ist.

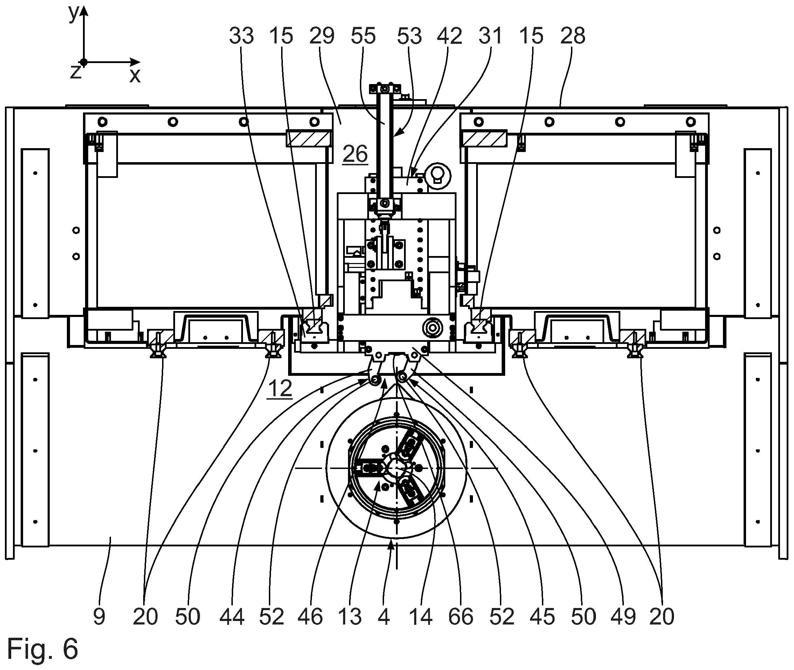

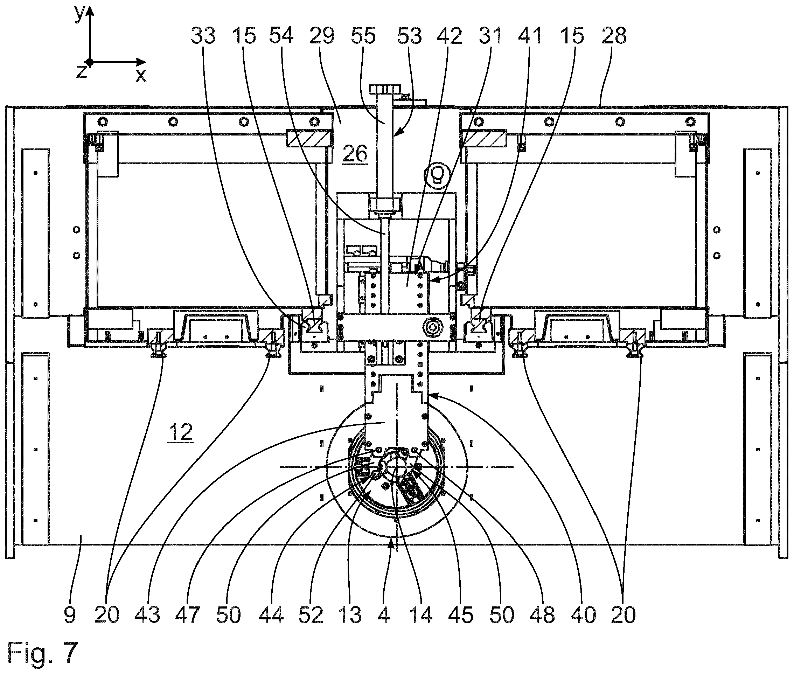

Eine lineare Bewegung des Arbeitskolbens 54 in y-Richtung wird in die lineare Bewegung des Lünettenschlittens 31 in y-Richtung übertragen. In Fig. 6 ist der Arbeitskolben 54 in einer in ein Zylindergehäuse 55 eingefahrenen Stellung und in Fig. 7 in einer aus dem Zylindergehäuse 55 herausgefahrenen Stellung dargestellt. Das Herausfahren des Arbeitskolbens 54 aus dem Zylindergehäuse 55 bedingt das Überführen des Lünettenschlittens 31 von der Lünetten-Parkposition in die Lünetten-Arbeitsposition.

Wie insbesondere den Fig. 6 und Fig. 7 zu entnehmen, durchsetzt das Zylindergehäuse 55 in der gezeigten Ausführungsvariante die Abdeckung 29. Es ist beispielsweise eine Lagerung des Zylindergehäuses 55 in der Abdeckung 29 möglich.

Durch die Linearantriebsvorrichtung 53 ist die Lünetteneinheit 8 von der Lünetten-Parkposition, in welcher sich der Lünettenschlitten 31 innerhalb der Maschinengestell-Ausnehmung 26 befindet, in die Lünetten-Abstützposition, in welcher der Lünettenschlitten 31 in den Arbeitsraum 12 hineinragt, überführbar. Die Bewegung des Lünettenschlittens 31 in y-Richtung mittels der Linearantriebsvorrichtung 53 und die Bewegung in z-Richtung durch den Zahnstangenantrieb ist mittels einer Steuereinheit steuerbar.

Die Funktionsweise der Werkzeugmaschine 1 ist wie folgt:
Fig. 1, Fig. 3, Fig. 4 und Fig. 6 zeigen die Lünetteneinheit 8 in der Lünetten-Parkposition. In der Lünetten-Parkposition befindet sich die Lünetteneinheit 8 mit dem Lünettenschlitten 31 und der Lünette 43 in der Maschinengestell-Ausnehmung 26. In die Werkstückspindel 4 ist kein Werkstück 2 eingesetzt. Der Arbeitskolben 54 der linearen Antriebsvorrichtung 53 befindet sich in der eingefahrenen Stellung.

Durch eine seitliche Ladeeinheit 67 wird dann das zu bearbeitende Werkstück 2 in die Werkstückspindel 4 eingesetzt und durch die Werkstückaufnahme 13 drehbar fixiert. Die Ladeeinheit 67 ist in Fig. 3 dargestellt. Anschließend wird die Gegenaufnahme 5 in z-Richtung in Richtung Werkstück 2 verfahren, bis die Zentrierspitze 56 der Gegenaufnahme 5 mit dem von der Werkstückspindel 4 abgewandten Ende des Werkstücks 2 in Kontakt tritt und das Werkstück 2 drehbar lagert.

Zum Überführen des Lünettenschlittens 31 und der Lünette 43 in die Lünetten-Arbeitsposition gemäß den Fig. 2, Fig. 5, Fig. 7 und Fig. 8 wird der Lünettenschlitten 31 mittels der Linearantriebsvorrichtung 53 in y-Richtung verfahren, bis sich die Lünette 43 im Arbeitsraum 12 befindet.

Grundsätzlich ist es auch möglich, die Gegenaufnahme 5 mit der Lünetteneinheit 8 derart koppelbar zu gestalten, das diese in z-Richtung auf den z-Führungsschienen synchron verfahren. Zur Kopplung könnte dabei ein z-Übertragungsglied dienen. Die Kopplung wäre durch Ansteuerung aufhebbar zu gestalten.

Anschließend werden die Klemmbacken 44, 45 um deren Klemmbacken-Schwenkachsen 47, 48 derart verschwenkt, dass die Klemmwalzen 51 der Tragarme 51 eine Anpresskraft auf das Werkstück 2 ausüben und das wellenartige Werkstück 2 in einem Bereich zwischen Gegenaufnahme 5 und Werkstückspindel 4 abstützen. Zusätzlich übt die dritte Klemmwalze 66 ebenfalls eine Anpresskraft auf das Werkstück 2 aus.

Für den alternativen Fall, dass die Schwenkbewegung der Klemmbacken 47, 48 nicht angetrieben ist, sind die Klemmbacken 47, 48 in y-Richtung auf das Werkstück 2 zuzubewegen, bis die Klemmbacken 47, 48 mittels Krafteinwirkung durch das Werkstück 2 voneinander wegbewegt werden. Dabei vergrößert sich der Abstand der Klemmwalzen 47, 48 zueinander entsprechend einem Werkstückdurchmesser des Werkstücks 2, wobei eine Vorspannung der Klemmbacken 47, 48 mittels der Klemmwalzen 51 dann auf das Werkstück 2 übertragen wird.

Das in der Werkstückspindel 4 befindliche Werkstück 2 wird nun in üblicher Weise mittels der Bearbeitungseinheiten 6, 7 bearbeitet. Das Werkstück 2 ist dabei an einer Seite in der Werkstückaufnahme 13 und an einer gegenüberliegenden Seite an der Gegenaufnahme 5 gelagert. In dieser Lünetten-Arbeitsposition arbeiten die Bearbeitungseinheiten 6, 7 in z-Richtung oberhalb bzw. unterhalb der das Werkstück 2 abstützenden Lünette 43. Nachdem die Bearbeitung oberhalb bzw. unterhalb der Lünette 43 abgeschlossen ist, wird die Lünetteneinheit 8 in z-Richtung verfahren, um auch den Bereich des Werkstücks 2 bearbeiten zu können, der zunächst von der Lünette 43 abgestützt war.

Nach der Bearbeitung des Werkstücks 2 durch die Bearbeitungseinheiten 6, 7 wird das Werkstück durch die Ladeeinheit 67 entnommen und parallel ein neues Werkstück 2 zur Bearbeitung an die Werkstückspindel 4 übergeben. Die Lünetteneinheit 8 ist hierzu in die Lünetten-Parkposition in y-Richtung in die Maschinengestell-Ausnehmung 26 zurückzufahren.

Wie den Fig. 1 bis 8 zu entnehmen, ist die Werkzeugmaschine 1 modulartig aufgebaut und umfasst als Module insbesondere die Bearbeitungseinheiten 6, 7, die Ladeeinheit 67, die Gegenaufnahme 5 sowie die Lünetteneinheit 8. Durch den modulartigen Aufbau sind grundsätzlich unterschiedliche Bearbeitungseinheiten 6, 7 und verschiedene Gegenaufnahmen 5 verwendbar. Der Aufbau der Werkzeugmaschine 1 ist daher flexibel an eine jeweilige Bearbeitungsaufgabe anpassbar.

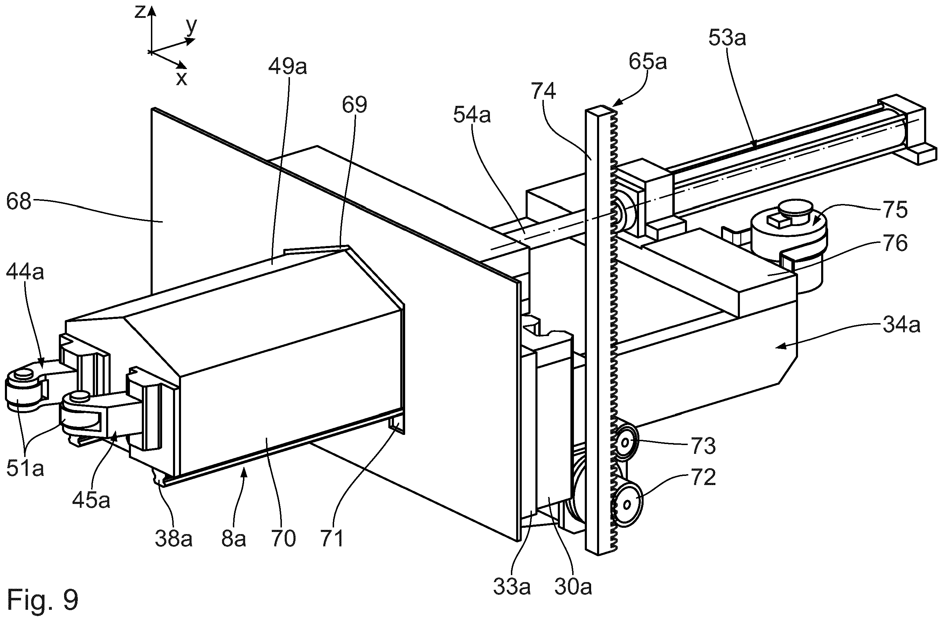

Nachfolgend wird anhand Fig. 9 eine zweite Ausführungsvariante einer Lünetteneinheit 8a beschrieben. Konstruktiv identische Teile erhalten dieselben Bezugszeichen mit einem nachgestellten a. Die Lünetteneinheit 8a dient zum Abstützen eines zu bearbeitenden Werkstückes. Hierzu weist die Lünetteneinheit 8a Klemmbacken 44a, 45a auf, die jeweils mittels rotierbar gelagerter Klemmwalzen 51a ein zu bearbeitendes Werkstück abstützen. Ein Klemmbackenantrieb ist in einem Lünettengehäuse 49a untergebracht. Im Unterschied zur Lünetteneinheit 8 weist die Lünetteneinheit 8a ein Abdichtelement 68 in Form einer Abdichtplatte auf. Die Abdichtplatte 68 dient zur Verhinderung eines Austritts von Schmutz, insbesondere von den zur Bearbeitung eingesetzten Medien, aus dem Arbeitsraum 12 in die Maschinengestell-Ausnehmung 26. Die Abdichtplatte 68 erstreckt sich in der Lünetten-Parkposition vorzugsweise in x-Richtung zwischen den z-Führungschienen 15 und ist vorteilhafterweise an einer dem Arbeitsraum 12 zugewandten Außenseite des U-förmigen Basisabschnitt 33a montiert. Die Abdichtplatte 68 weist eine Durchbrechung 71 zum Durchtritt des Lünettengehäuses 49a und der y-Laufschienen 38a auf. Eine Innenkontur der Durchbrechung 71 ist auf eine Außenkontur des Lünettengehäuses 49a und der y-Laufschienen 38a angepasst.

Über Abstreifelemente 69 wird das Lünettengehäuse 49a an einer Lünettengehäuse-Außenwand 70 beim Bewegen der Lünetteneinheit 8 entlang der y-Richtung von der Lünetten-Arbeitsposition in die Lünetten-Parkposition abgestreift. Die Abstreifelemente 69 sind an der Innenkontur der Durchbrechung 71 vorgesehen. Bei den Abstreifelementen 69 handelt es sich vorzugsweise um Bürsten oder ähnliches. Durch das Abstreifen des Lünettengehäuses 49a mittels der Abstreifelemente 69 wird an der Lünettengehäuse-Außenwand 70 haftender Schmutz zumindest reduziert und ein Verschmutzen der Maschinengestell-Ausnehmung 26 verhindert.

In Fig. 9 ist ferner der Zahnstangenantrieb 65a im Detail dargestellt. Bei dem Zahnstangenantrieb 65a ist ein Antriebsritzel 72 durch einen Motor, insbesondere durch einen Servomotor antreibbar. Das Antriebsritzel 72 löst die Bewegung der Lünetteneinheit 8a in z-Richtung aus. In dem Ausführungsbeispiel gemäß Fig. 9 umfasst der Zahnstangenantrieb 65a ein Schmierritzel 73 zum Schmieren des Zahnstangenantriebs 65a, insbesondere zum Schmieren einer Zahnstange 74. Das Schmierritzel 73 kann an eine Zentralschmierung der Werkzeugmaschine 1 angeschlossen sein oder alternativ durch eine Schmierpatrone 75 mit einem Schmiermittel, insbesondere Fett oder Öl, in regelmäßigen Abständen geschmiert werden. Die Schmierpatrone 75 ist in der Ausführungsvariante gemäß Fig. 9 an einem x-Stützbalken 76 des Auflageabschnitts 34a angeordnet. Ebenfalls auf dem x-Stützbalken 76 ist die Linearantriebsvorrichtung 53a in Form einer hydraulischen Kolben-Zylinder-Einheit angeordnet.

Der Zahnstangenantrieb 65 des ersten Ausführungsbeispiels der Lünetteneinheit 8 gemäß Fig. 1 bis Fig. 8 kann entsprechend des Zahnstangenantriebs 65a ausgebildet sein.

## Patentansprüche

1. Werkzeugmaschine zur Bearbeitung von Werkstücken (2) mit
- einem ständerförmigen Maschinengestell (3),
- einer Werkstückspindel (4) zur Aufnahme von zu bearbeitenden Werkstücken (2), die
-- an dem Maschinengestell (3) angeordnet ist und
-- eine Werkstückaufnahme (13) aufweist, die um eine parallel zu einer vertikalen z-Richtung verlaufende Drehachse (14) drehantreibbar ist,
- mindestens einer Bearbeitungseinheit (6, 7), die
-- seitlich neben der Werkstückspindel (4) an dem Maschinengestell (3) angeordnet ist und
-- einen in einer horizontalen x-Richtung und der z-Richtung linear verfahrbaren Werkzeughalter (18, 19) aufweist,
- einer drehbaren Gegenaufnahme (5), die gegenüberliegend zu der Werkstückspindel (4) an dem Maschinengestell (3) angeordnet ist, wobei die Gegenaufnahme (5) und die Werkstückspindel (4) in z-Richtung relativ zueinander linear verfahrbar sind, und
- einer Lünetteneinheit (8) zum Abstützen der zu bearbeitenden Werkstücke (2),
**dadurch gekennzeichnet,**
**dass** die Lünetteneinheit (8) in einer Maschinengestell-Ausnehmung (26), die sich in einer horizontalen y-Richtung in dem Maschinengestell (3) erstreckt, angeordnet ist, und
**dass** die Lünetteneinheit (8) in der y-Richtung und der z-Richtung verfahrbar ist.

2. Werkzeugmaschine nach Anspruch 1, **dadurch gekennzeichnet, dass** die Lünetteneinheit (8) einen in der horizontalen y-Richtung verfahrbaren Lünettenschlitten (31) aufweist.

3. Werkzeugmaschine nach Anspruch 1 oder 2, **dadurch gekennzeichnet, dass** die Lünetteneinheit (8) ein Traggestell (32) aufweist, welches
- an dem Maschinengestell (3) angeordnet und sich in der x-Richtung und der y-Richtung erstreckt und
- entlang der z-Richtung in der Maschinengestell-Ausnehmung (26) linear verfahrbar ist.

4. Werkzeugmaschine nach Anspruch 3, **dadurch gekennzeichnet, dass** der Lünettenschlitten (31) relativ zu dem Traggestell (32) in y-Richtung zwischen einer Lünetten-Arbeitsposition und einer Lünetten-Parkposition verfahrbar angeordnet ist.

5. Werkzeugmaschine nach Anspruch 4, **dadurch gekennzeichnet, dass** mindestens eine Linearführungsanordnung (36) zur Führung des Lünettenschlittens (31) in y-Richtung an dem Traggestell (32) vorgesehen ist, wobei die Linearführungsanordnung (36)
- mindestens einen an dem Traggestell (32) vorgesehenen Lagerkörper (37) und
- mindestens eine an dem Lünettenschlitten (31) vorgesehene Laufschiene (38) umfasst, wobei
- der mindestens eine Lagerkörper (37) die mindestens eine Laufschiene (38) verschiebbar führt.

6. Werkzeugmaschine nach einem der Ansprüche 2 bis 5, **dadurch gekennzeichnet, dass** der Lünettenschlitten (31) entlang der y-Richtung mittels einer Linearantriebsvorrichtung (53) verfahrbar ist, wobei die Linearantriebsvorrichtung (53) insbesondere auf dem Traggestell (32) angeordnet ist.

7. Werkzeugmaschine nach einem der Ansprüche 1 bis 6, **dadurch gekennzeichnet, dass** an einem Lünettenschlitten (31) eine Lünette (43) mit mindestens zwei Klemmbacken (44, 45) angeordnet ist, wobei das Werkstück (2) in einer Lünetten-Arbeitsposition zwischen den Klemmbacken (44, 45) drehbar abgestützt ist.

8. Werkzeugmaschine nach Anspruch 7, **dadurch gekennzeichnet, dass** die Klemmbacken (44, 45) jeweils um eine in der z-Richtung verlaufende Klemmbackenschwenkachse (47, 48) verschwenkbar sind, wobei das Verschwenken der Klemmbacken (44, 45) durch einen Klemmbackenantrieb erfolgt.

9. Werkzeugmaschine nach einem der Ansprüche 2 bis 8, **dadurch gekennzeichnet, dass** der Lünettenschlitten (31) einen dem abzustützendem Werkstück (2) zugewandten Abstützabschnitt (40) und einen in y-Richtung vom Abstützabschnitt (40) beabstandeten Antriebsabschnitt (41) aufweist, wobei
- der Abstützabschnitt (40) zur Aufnahme einer Lünette (43) und
- der Antriebsabschnitt zum Zusammenwirken mit einer Linearantriebsvorrichtung (53) dient.

10. Werkzeugmaschine nach einem der Ansprüche 1 bis 9, **dadurch gekennzeichnet, dass** zwei Bearbeitungseinheiten (6, 7) beidseitig neben der Werkstückspindel (4) angeordnet sind, wobei die Maschinengestell-Ausnehmung (26) in dem Maschinengestell (3) in x-Richtung zwischen den Bearbeitungseinheiten (6, 7) angeordnet ist.

11. Werkzeugmaschine nach einem der Ansprüche 1 bis 10, **dadurch gekennzeichnet, dass** die Maschinengestell-Ausnehmung (26) in dem Maschinengestell (3) in z-Richtung zwischen der drehbaren Gegenaufnahme (5) und der Werkstückspindel (4) angeordnet ist.

12. Werkzeugmaschine nach einem der Ansprüche 1 bis 11, **dadurch gekennzeichnet, dass** die die Maschinengestell-Ausnehmung (26) als Durchbruch ausgebildet ist.

13. Werkzeugmaschine nach einem der Ansprüche 1 bis 12, **gekennzeichnet durch** eine Ladeeinheit (67) zum seitlichen Be- und Entladen der Werkstückspindel (4) mit Werkstücken (2).

## Claims

1. Machine tool for machining workpieces (2), the machine tool comprising
- a machine frame (3) configured in the shape of a stand,
- a workpiece spindle (4) configured to accommodate workpieces (2) to be machined, the workpiece spindle (4)
-- being arranged on the machine frame (3), and
-- having a workpiece holder (13), which is drivable for rotation about a rotational axis (14) running parallel to a vertical z-direction,
- at least one machining unit (6, 7), which
-- is arranged on the machine frame (3) laterally adjacent to the workpiece spindle (4) and
-- has a tool holder (18, 19), which is displaceable linearly in a horizontal x-direction and the z-direction,
- a rotatable counter-holder (5), which is arranged on the machine frame (3) opposite the workpiece spindle (4), the counter holder (5) and the workpiece spindle (4) being linearly displaceable in relation to each other in the z-direction, and
- a steady rest unit (8) configured to support the workpieces (2) to be machined,
**characterised**
**in that** the steady rest unit (8) is arranged in a machine frame recess (26) extending in the machine frame (3) in a horizontal y-direction, and
**in that** the steady rest unit (8) is displaceable in the y-direction and in the z-direction.

2. Machine tool according to claim 1, **characterised in that** the steady rest unit (8) has a steady rest carriage (31) that is displaceable in the horizontal y-direction.

3. Machine tool according to claim 1 or 2, **characterised in that** the steady rest unit (8) has a support frame (32), which
- is arranged on the machine frame (3) such as to extend in the x-direction and in the y-direction, and
- is linearly displaceable in the machine frame recess (26) along the z-direction.

4. Machine tool according to claim 3, **characterised in that** the steady rest carriage (31) is arranged such as to be displaceable in the y-direction in relation to the support frame (32) between a steady rest working position and a steady rest parking position.

5. Machine tool according to claim 4, **characterised in that** at least one linear guide assembly (36) is provided on the support frame (32) for guiding the steady rest carriage (31) in the y-direction, the linear guide assembly (36) comprising
- at least one bearing body (37) provided on the support frame (32), and
- at least one guide rail (38) provided on the steady rest carriage (31), wherein
- the at least one bearing body (37) guides the at least one guide rail (38) in a displaceable manner.

6. Machine tool according to any one of claims 2 to 5, **characterised in that** the steady rest carriage (31) is displaceable along the y-direction by means of a linear drive device (53), the linear drive device (53) being arranged in particular on the support frame (32).

7. Machine tool according to any one of claims 1 to 6, **characterised in that** a steady rest (43) comprising at least two clamping jaws (44, 45) is arranged on a steady rest carriage (31), the workpiece (2) being rotatably supported between the clamping jaws (44, 45) in a steady rest working position.

8. Machine tool according to claim 7, **characterised in that** the clamping jaws (44, 45) are each pivotable about a clamping jaw pivot axis running in the z-direction, the clamping jaws (44, 45) being pivoted by means of a clamping jaw drive.

9. Machine tool according to any one of claims 2 to 8, **characterised in that** the steady rest carriage (31) has a support portion (40) facing the workpiece (2) to be supported and a drive portion (41) spaced from the support portion (40) in the z-direction, with
- the support portion (40) being used to accommodate a steady rest (43), and
- the drive portion being used to interact with a linear drive device (53).

10. Machine tool according to any one of claims 1 to 9, **characterised in that** two machining units (6, 7) are arranged at both sides of the workpiece spindle (4), the machine frame recess (26) in the machine frame (3) being arranged between the machining units (6, 7) in the x-direction.

11. Machine tool according to any one of claims 1 to 10, **characterised in that** the machine frame recess (26) is arranged in the machine frame (3) in the z-direction between the rotatable counter holder (5) and the workpiece spindle (4).

12. Machine tool according to any one of claims 1 to 11, **characterised in that** the machine frame recess (26) is configured as a breakthrough.

13. Machine tool according to any one of claims 1 to 12, **characterised by** a loading unit (67) for the lateral loading and unloading of the workpiece spindle (4) with workpieces (2).

## Revendications

1. Machine-outil permettant l'usinage de pièces (2) comprenant
- un bâti de machine (3) en forme de support,
- une broche porte-pièce (4) permettant de loger des pièces (2) à usiner, qui
-- est agencée sur le bâti de machine (3) et
-- comprend un logement de pièce (13) qui peut être entraîné en rotation autour d'un axe de rotation (14) s'étendant parallèlement à une direction z verticale,
- au moins une unité d'usinage (6, 7), qui
-- est agencée latéralement à côté de la broche porte-pièce (4) sur le bâti de machine (3) et
-- un porte-outil (18, 19) mobile linéairement dans une direction x horizontale et la direction z,
- un logement complémentaire (5) rotatif, qui est agencé à l'opposé de la broche porte-pièce (4) sur le bâti de machine (3), le logement complémentaire (5) et la broche porte-pièce (4) étant mobiles linéairement l'un par rapport à l'autre dans la direction z, et
- une unité formant lunette (8) permettant de soutenir les pièces (2) à usiner,
**caractérisée**
**en ce que** l'unité formant lunette (8) est agencée dans un évidement de bâti de machine (26) qui s'étend dans une direction y horizontale dans le bâti de machine (3), et
**en ce que** l'unité formant lunette (8) est mobile dans la direction y et la direction z.

2. Machine-outil selon la revendication 1, **caractérisée en ce que** l'unité formant lunette (8) comprend un coulisseau de lunette (31) mobile dans la direction y horizontale.

3. Machine-outil selon la revendication 1 ou 2, **caractérisée en ce que** l'unité formant lunette (8) comprend un bâti porteur (32), lequel
- est agencé sur le bâti de machine (3) et s'étend dans la direction x et la direction y et
- est mobile linéairement le long de la direction z dans l'évidement de bâti de machine (26).

4. Machine-outil selon la revendication 3, **caractérisée en ce que** le coulisseau de lunette (31) est agencé de manière à pouvoir se déplacer par rapport au bâti porteur (32) dans la direction y entre une position de travail de lunette et une position de rangement de lunette.

5. Machine-outil selon la revendication 4, **caractérisée en ce qu'**au moins un système de guidage linéaire (36) est prévu pour le guidage du coulisseau de lunette (31) dans la direction y sur le bâti porteur (32), le système de guidage linéaire (36)
- comprenant au moins un corps de support (37) prévu sur le bâti porteur (32) et
- au moins une glissière de roulement (38) prévue sur le coulisseau de lunette (31),
- le ou les corps de support (37) guidant de manière mobile la ou les glissières de roulement (38).

6. Machine-outil selon l'une quelconque des revendications 2 à 5, **caractérisée en ce que** le coulisseau de lunette (31) peut être déplacé le long de la direction y au moyen d'un dispositif d'entraînement linéaire (53), le dispositif d'entraînement linéaire (53) étant agencé en particulier sur le bâti porteur (32).

7. Machine-outil selon l'une quelconque des revendications 1 à 6, **caractérisée en ce qu'**une lunette (43) comprenant au moins deux mâchoires de serrage (44, 45) est agencée sur un coulisseau de lunette (31), la pièce (2) étant en appui rotatif entre les mâchoires de serrage (44, 45) dans une position de travail de lunette.

8. Machine-outil selon la revendication 7, **caractérisée en ce que** les mâchoires de serrage (44, 45) peuvent pivoter chacune autour d'un axe de pivotement de mâchoires de serrage (47, 48) s'étendant dans la direction z, le pivotement des mâchoires de serrage (44, 45) étant réalisé par un entraînement des mâchoires de serrage.

9. Machine-outil selon l'une quelconque des revendications 2 à 8, **caractérisée en ce que** le coulisseau de lunettes (31) comprend une section d'appui (40) tournée vers la pièce (2) à soutenir et une section d'entraînement (41) espacée de la section d'appui (40) dans la direction y,
- la section d'appui (40) servant à loger une lunette (43) et
- la section d'entraînement à coopérer avec un dispositif d'entraînement linéaire (53).

10. Machine-outil selon l'une quelconque des revendications 1 à 9, **caractérisée en ce que** deux unités d'usinage (6, 7) sont agencées bilatéralement à côté de la broche porte-pièce (4), l'évidement de bâti de machine (26) étant ménagé dans le bâti de machine (3) dans la direction x entre les unités d'usinage (6, 7).

11. Machine-outil selon l'une quelconque des revendications 1 à 10, **caractérisée en ce que** l'évidement de bâti de machine (26) est ménagé dans le bâti de machine (3) dans la direction z entre le logement complémentaire (5) rotatif et la broche porte-pièce (4).

12. Machine-outil selon l'une quelconque des revendications 1 à 11, **caractérisée en ce que** l'évidement de bâti de machine (26) est réalisé sous la forme d'une ouverture.

13. Machine-outil selon l'une quelconque des revendications 1 à 12, **caractérisée par** une unité de chargement (67) pour le chargement latéral en pièces (2) et le déchargement latéral de pièces de la broche porte-pièce (4).
